# EUROPEAN PATENT APPLICATION

(11) **EP 2 428 759 A2**
(43) Date of publication of application: **14.03.2012**
(21) Application number: 11180654.3
(22) Date of filing: 09.09.2011
(51) Int. Cl.: F28D 9/00, F28F 27/02, F01M 5/00, F16H 57/04

(54) **Oil cooler**

(30) Priority: 10.09.2010 JP 2010202652
(71) Applicant: MAHLE Filter Systems Japan Corporation, Tokyo 171-0014 (JP)
(72) Inventor: Ohi, Naoki, Toshima-ku, Tokyo 171-0014 (JP); Arita, Eriya, Toshima-ku, Tokyo 171-0014 (JP)
(74) Representative: Grünecker, Kinkeldey, Stockmair & Schwanhäusser

(57) **Abstract**

An oil cooler (1) includes a heat exchanger core (3) having a plurality of plates (2) laid one upon another to define each of an oil passage through which oil flows and a coolant passage through which coolant flows, between the plates. An uppermost plate (2) of the plates (2) has a core coolant inlet (7) and a core coolant outlet (8). The core coolant inlet (7) and the core coolant outlet (8) are communicated with the coolant passage. A flow passage control valve (4) is disposed on an uppermost part of the heat exchanger core (3) and has a first coolant introduction opening (15) through which coolant at a relatively high temperature is supplied and a second coolant introduction opening (14) through which coolant at a relatively low temperature is supplied. The first coolant introduction opening (15) and the second coolant introduction opening (14) are changed over to be communicated with the core coolant inlet (7).

## Description

### BACKGROUND OF THE INVENTION

This invention relates to an oil cooler to be used for cooling hydraulic oil of an automatic transmission of an automotive vehicle or lubricating oil of an internal combustion engine.

For example, a temperature of hydraulic oil to be used in an automatic transmission of an automotive vehicle generally arises to a level higher than that of engine coolant of an internal combustion engine, during operation of the engine. The hydraulic oil is cooled by an oil cooler using the coolant, so that the temperature of the hydraulic oil can be maintained at its suitable level. In general, the oil cooler is installed, for example, on a housing of the automatic transmission, and the coolant is introduced from the side of the internal combustion engine to the oil cooler through outside pipings.

Here, for example, during a cold starting of the internal combustion engine in winter season, it is desirable not to make a cooling action to the hydraulic oil by the oil cooler immediately after an engine starting in order to accomplish an early temperature rise of the coolant. In view of this, Japanese Patent Provisional Publication No. 2003-286846 discloses disposing a bypassing mechanism using a thermostatic valve, between the inlet side and the outlet side of an oil cooler, in which coolant flows bypassing the oil cooler without flowing through the oil cooler until the temperature of the coolant reaches a certain level. Additionally, Japanese Patent Publication No. 3-79637 discloses disposing a thermostatic valve operated in response to a temperature of engine lubricating oil, in an oil flowing system for an oil cooler, in which coolant is not flown through the oil cooler until the temperature of the lubricating oil rises to a certain high level.

### SUMMARY OF THE INVENTION

An oil cooler for cooling hydraulic oil of an automatic transmission or lubricating oil of an internal combustion engine is usually required to make a cooling action to the oil and may be conversely required be to heated with heat of the coolant according to conditions. For example, a temperature rise of the hydraulic oil of the automatic transmission after an engine starting is generally slow as compared with that of the coolant, and therefore the temperature rise of the hydraulic oil can be promoted under the heating action of the coolant thereby early accomplishing a friction reduction during this period after the engine starting.

However, in the above-discussed conventional oil coolers, flowing of the coolant or the oil is regulated merely in an ON-OFF manner to control a heat exchange between the coolant and the oil. Accordingly, with such conventional oil coolers, cooling and heating actions of the coolant to the oil cannot be widely controllably changed.

An oil cooler according to the present invention comprises a heat exchanger core including a plurality of plates laid one upon another to define each of an oil passage through which oil flows and an coolant passage through which coolant flows, between the plates. The plates include an uppermost plate which has a portion defining a core coolant inlet and a portion defining a core coolant outlet. The core coolant inlet and the core coolant outlet are communicated with the coolant passage. A flow passage control valve is disposed on an uppermost part including the uppermost plate, of the heat exchanger core and includes a portion defining a first coolant introduction opening through which coolant at a relatively high temperature is supplied and a portion defining a second coolant introduction opening through which coolant at a relatively low temperature is supplied, the relatively high temperature being higher than the relatively low temperature, the first coolant introduction opening and the second coolant introduction opening being changed over to be communicated with the core coolant inlet.

For example, in a coolant circulation system of an internal combustion engine, two kinds of coolants different in temperature can be readily obtained. One of them is relatively low temperature coolant obtained immediately after flowing through a radiator, and the other is relatively high temperature coolant obtained after flowing through a water jacket of the engine. In the oil cooler according to the present invention, when oil is low in temperature so as to be required to be heated with coolant, the oil can be positively heated by using the relatively high temperature coolant. Such relatively high temperature coolant can be used also to weaken the degree of cooling to the oil. Conversely, when the oil is required to be strongly cooled, the relatively low temperature coolant is introduced into the heat exchanger core thereby positively cooling the oil.

In a preferred embodiment, the flow passage control valve includes a portion defining a coolant outlet opening communicated with the core coolant outlet of the heat exchanger core. At least one of the first and second coolant introduction openings is communicable with the coolant outlet opening to allow the coolant from at least one of the coolant introduction opening to bypass the heat exchanger core so as to be flown to the coolant outlet opening of the flow passage control valve.

The coolant outlet opening serves as a discharge path for coolant which bypasses the heat exchanger core in addition to serving as a discharge path for coolant which flows through the heat exchanger core and flows out from the core coolant outlet of the heat exchanger core.

For example, the flow passage control valve includes a rotary valve including a section defining four ports which are respectively communicated with the first coolant introduction opening, the second coolant introduction opening, the core coolant inlet and the coolant outlet opening, and a rotatable valve member for accomplishing a changeover of from a communication between at least two of the four ports to another communication between at least two of the four ports in accordance with a rotating position thereof. An arrangement of the four ports is different according to the configuration of the valve member and to a manner of the changeover of the valve member.

Here, the flow passage control valve may fully change a flow passage of coolant or may take an intermediate operational position at which the opening degree of the valve changes stepwise or continuously. For example, the flow passage control valve may take an intermediate operational position at which coolant supplied from one of the first and second coolant introduction opening is dividedly flown into the core coolant inlet of the heat exchanger core and the coolant outlet opening of the flow passage control valve.

In a preferred embodiment, the flow passage control valve includes a valve housing including a cover section installed on the uppermost part of the heat exchanger core and located to cover the core coolant outlet. The cover section forms thereinside a bypass passage extending from the first and second coolant introduction openings to the coolant outlet opening, the bypass passage being communicated with core coolant outlet of the heat exchanger core.

According to the present invention, cooling and heating actions to oil can be changed in a wide range by changing over the first and second coolant introduction openings which are respectively supplied with coolants different in temperature, under the action of the flow passage control valve disposed at the top part of the heat exchanger core.

The other objects and features of this invention will become understood from the following description with reference to the accompanying drawings.

### BRIEF DESCRIPTION OF THE DRAWINGS

In the drawings, like reference numerals designate like parts and elements throughout all figures, in which:
Fig. 1 is a perspective view of an embodiment of an oil cooler according to the present invention);
Fig. 2 is a block diagram showing a coolant circulation system in which the oil cooler of Fig. 1 is incorporated;
Fig. 3 is an exploded perspective view of a flow passage control valve forming part of the oil cooler of Fig. 2;
Fig. 4 is a perspective and sectional view of the flow passage control valve of Fig. 3;
Figs. 5A to 5E are schematic illustrations showing five positions of the flow passage control valve of Fig. 4, the five positions being changed over to control a flow passage of coolant;
Fig. 6 is a graph showing an example of a temperature control for hydraulic oil of an automatic transmission of an automotive vehicle, using the flow passage control valve of Fig. 4;
Fig. 7 is a schematic illustration showing a modified example of the flow passage control valve of the oil cooler according to the present invention; and
Fig. 8 is a schematic illustration showing another modified example of the flow passage control valve of the oil cooler according to the present invention.

### DETAILED DESCRIPTION OF THE INVENTION

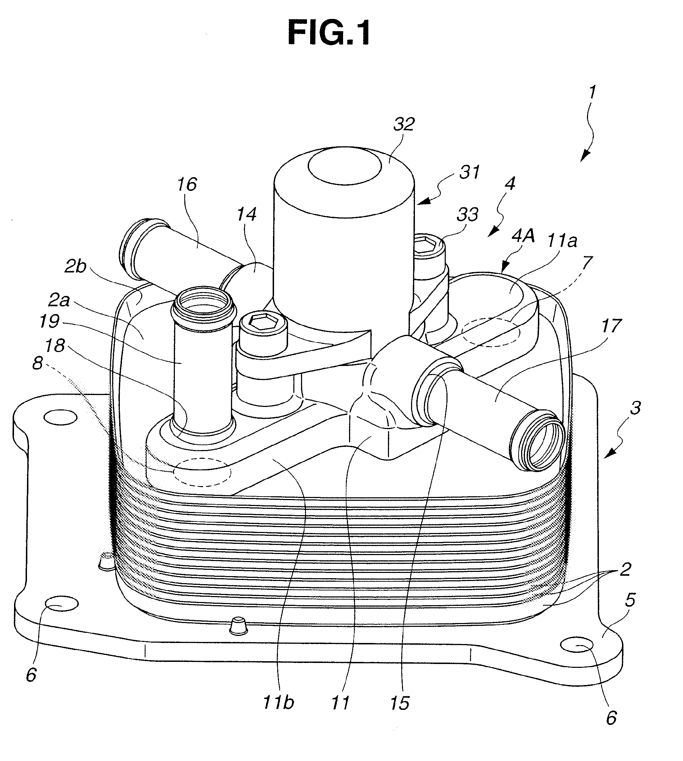

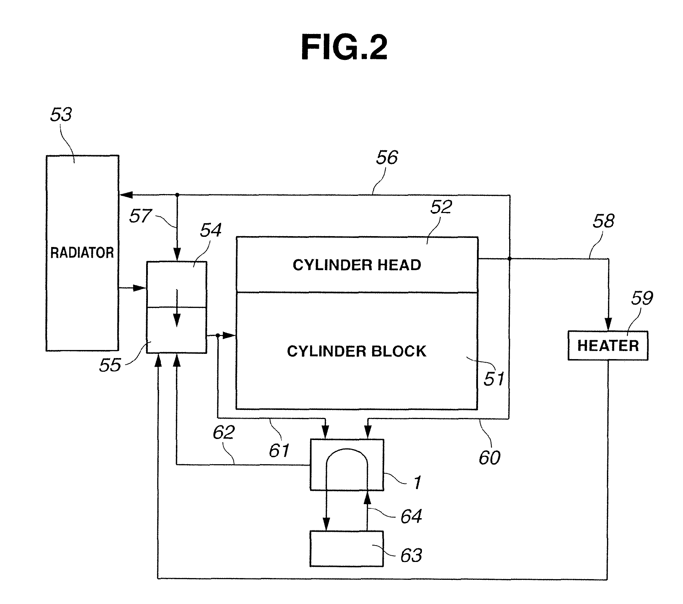

Referring now to Fig. 1 of drawings, an embodiment of an oil cooler according to the present invention is illustrated by the reference numeral 1. The oil cooler 1 in this embodiment is for cooling hydraulic oil of an automatic transmission of an automotive vehicle. The oil cooler 1 is used upon being incorporated in a cooling system for an internal combustion engine of the automotive vehicle as schematically illustrated in Fig. 2.

As shown in Fig. 2, the internal combustion engine is provided with a basic coolant circulation system which includes water jackets formed respectively in a cylinder block 51 and a cylinder head 52. A radiator 53 is fluidly connected to the water jackets. A thermostatic valve 54 is fluidly connected to the water jackets and the radiator 53. A water pump 55 is fluidly connectable to the water jackets and the radiator 53. Coolant whose temperature has become high upon receiving heat of various parts of the internal combustion engine is taken out from the water jackets of the cylinder block 51 and the cylinder head 52 through a rear end section of the cylinder head and introduced into the radiator 53 through a radiator inlet passage 56 to be cooled by the radiator 53. Then, coolant which has passed through the radiator 53 to be cooled is returned to the water jackets of the cylinder block 51 and the cylinder head 52 through a front end section of the cylinder block 51. The thermostatic valve 54 makes its changeover action in response to a temperature of coolant so as to allow the upstream side (suction side) of the water pump 55 to be communicated with the side of a bypass passage 57 branched off from the radiator inlet passage 56 when the temperature of coolant is low, and to be communicated with the side of the radiator 53 when the temperature of coolant is high. A heater passage 58 connected to the upstream side of the water pump 55 is branched off from the radiator inlet passage 56. A heater core 59 for heating a passenger compartment is disposed in the heater passage 58.

Additionally, a high temperature coolant passage 60 as a coolant passage for the oil cooler 1 is branched off from the radiator inlet passage 56, and a low temperature coolant passage 61 is branched off from the downstream side (discharge side) of the water pump 55. The high and low temperature coolant passages 60, 61 are connected to the oil cooler 1. A coolant return passage 62 for returning coolant from the oil cooler 1 is connected from the oil cooler 1 to the suction side of the water pump 55. The oil cooler 1 is, for example, installed to an outer wall surface of a housing (not shown) of the automatic transmission 63, in which hydraulic oil in the automatic transmission 63 is circulated through the oil cooler 1 as indicated as an oil passage 64 in Fig. 1.

As shown in Fig. 1, the oil cooler 1 includes a heat exchanger core 3 for making heat exchange between hydraulic oil and coolant, and a flow passage control valve 4 for making a flow passage changeover action and/or a control for coolant to be introduced into the heat exchanger core 3. The heat exchanger core 3 has a known configuration and includes a plurality of rectangular and shallow dish-shaped plates 2 which are laid one upon another and sealingly secured to each other so as to form a plurality of oil passages through which hydraulic oil flows and a plurality of coolant passages through which coolant flows. Each oil passage is defined between the adjacent plates 2, and each coolant passage is defined between the adjacent plates 2, in which each oil passage and each coolant passage are located on the opposite sides of each plate 2. Thus, the oil passage and the coolant passage are alternately formed in a direction in which the plates 2 are laid one upon another. More specifically, two kinds of plates 2 which are similar but different in detailed structure are alternately laid one upon another, in which each plate 2 is formed with boss-like sections each of which defines an opening so that the adjacent oil passages are communicated with each other through the openings of the boss-like sections while the adjacent coolant passages are communicated with each other through the openings the boss-like sections. The oil passages are communicated with each other through the openings of the boss-like sections while the coolant passages are communicated with each other through the openings of the boss-like sections. The free end of the boss-like section of the plate 2 is sealingly secured to the adjacent plate 2, in which the opening of the boss-like section of the plate 2 is communicated with an opening (not shown) of the adjacent plate 2. Additionally, each plate 2 includes a flat bottom section 2a and a peripheral section 2b. The peripheral section 2b is frame-shaped and has a generally rectangular lower end integral with a generally rectangular periphery of the flat bottom section 2a, and a generally rectangular upper end. The peripheral section 2b is tapered from the upper end to the lower end. The peripheral sections 2b of the adjacent plates 2 are sealingly secured to each other.

A relatively thick bottom plate 5 is sealingly secured to the bottom of the heat exchanger core 3 and formed with an oil inlet (not shown) and an oil outlet (not shown) which are communicated with the oil passages in the heat exchanger core 3. This bottom plate 5 is secured to the outer wall surface of the housing (not shown) of the automatic transmission 63 so that the oil inlet and the oil outlet are respectively communicated with oil passages of the automatic transmission 63. Accordingly, hydraulic oil flowing into the heat exchanger core 3 through the oil inlet of the bottom plate 5 flows through the oil passages each of which is defined between the adjacent plates 2 so as to make heat exchange between it and coolant flowing through the coolant passages each of which is defined between the adjacent plates 2. Then, the hydraulic oil undergoing the heat exchange is returned to the side of the automatic transmission 3 through the oil outlet of the bottom plate 5.

The top or uppermost plate 2 of the heat exchanger core 3 is formed with a core coolant inlet 7 and a core coolant outlet 8 which are communicated with the coolant passages of the heat exchanger core 3. Coolant flows into the coolant passages of the heat exchanger core 3 through the core coolant inlet 7, whereas coolant flows out of the coolant passages of the heat exchanger core 3 through the core coolant outlet 8. The core coolant inlet 7 and the core coolant outlet 8 are located on or along a diagonal line (not shown) of the uppermost plate 2 and covered with a valve housing 4A of the flow passage control valve 4. The valve housing 4A extends along the same diagonal line so that the core coolant inlet 7 and the core coolant outlet 8 cannot be seen from the outside of the oil cooler 1. Accordingly, coolant flowing into the heat exchanger core 3 through the core coolant inlet 7 of the uppermost plate 2 flows through the coolant passages each of which is defined between the adjacent plates 2 so as to make heat exchange between it and hydraulic oil flowing through the oil passages each of which is defined between the adjacent plates 2. Then, coolant which has undergone the heat exchange is discharged out of the heat exchanger core 3 through the core coolant outlet 8.

Each of the plates 2 and the bottom plate 5 in a state before assembly of the oil cooler 1 is formed, for example, of a so-called cladding material which is prepared by coating the surface of a matrix material made of an aluminum alloy with a brazing filler metal. Such plates 2 and the bottom plate 5 are laid one upon another in a state of Fig. 1 and heated within a furnace to be brazed so that required parts of the plates 2 and the plate 5 are securely joined to each other with the brazing filler metal, thereby producing the heat exchanger core 3.

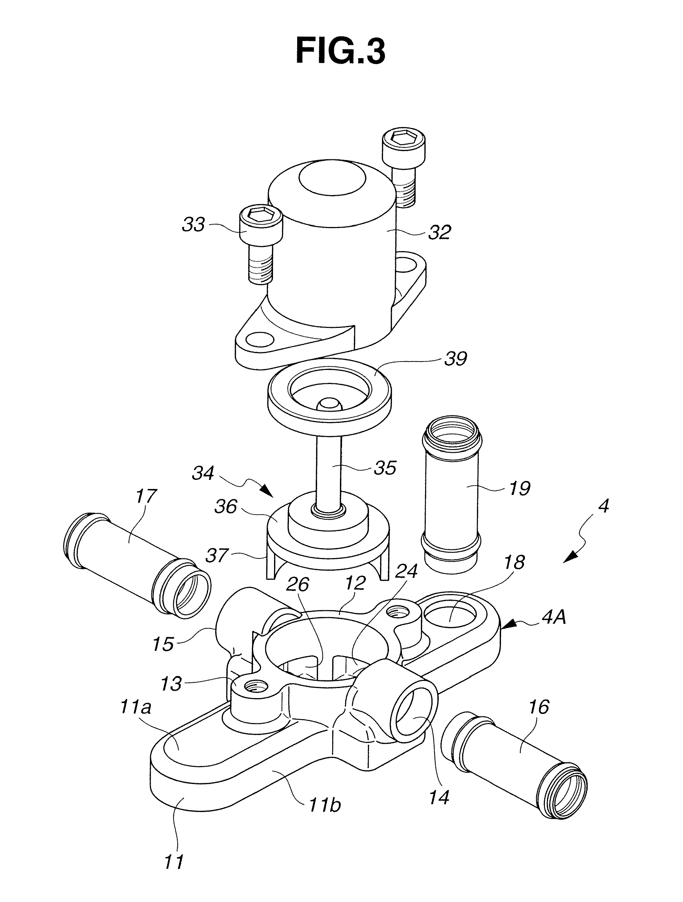

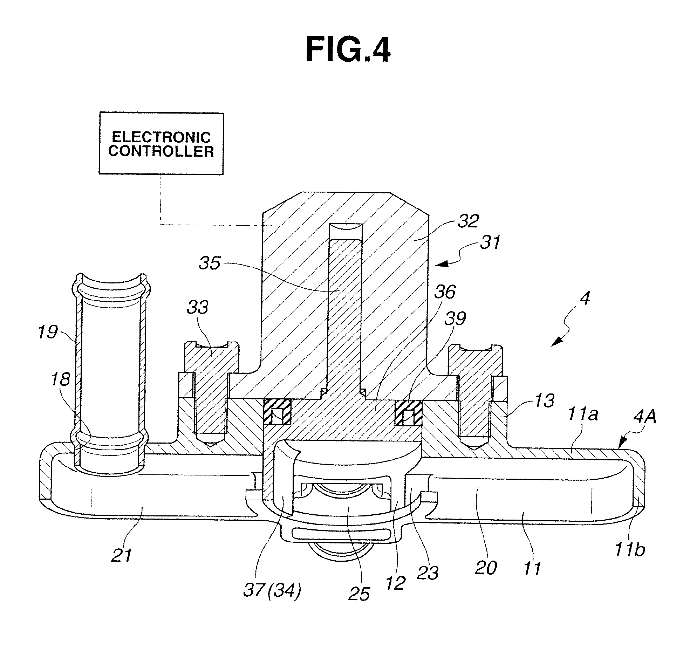

Fig. 3 is an exploded perspective view of the flow passage control valve 4, and Fig. 4 is a perspective and sectional illustration of the flow passage control valve 4. As shown in these figures, the flow passage control valve 4 is mounted on a top or uppermost part (including the uppermost plate 2) of the heat exchanger core 3. The valve housing 4A of the flow passage control valve 4 includes a generally reversed boat-shaped (or generally elongate oval-shaped in section) cover section 11 including a flat top wall 11a and a peripheral wall 11b, so that the cover section 11 is opened at its bottom. The opposite end portions of the cover section 11 are rounded. The valve housing 4A includes a generally cylindrical valve member fitting wall section 12 integral with the cover section 11 and located at the longitudinally central part of the cover section 11. The lower end of the valve member fitting wall section 12 extends to the bottom of the cover section 11 through the space defined inside the cover section 11 so that the lower end surface of the valve member fitting wall section 12 is flush with the lower end surface of the peripheral wall 11b of the cover section 11. The upper portion of the valve member fitting wall section 12 extends upward from the top wall 11a of the cover section 11 and is integral with a pair of bolt boss sections 13 which are located on the opposite sides of the upper portion and positioned along the longitudinal axis of the cover section 11. The valve member fitting wall section 12 is provided with a cylindrical low temperature coolant introduction opening 14 and a cylindrical high temperature coolant introduction opening 15 which are located on the opposite sides of the upper portion of the valve member fitting section 12 and positioned along an axis perpendicular to the longitudinal axis of the cover section 11. Metal connector pipes 16, 17 are respectively installed to the low and high temperature coolant introduction openings 14, 15. Additionally, the top wall section 11a of the cover section 11 is formed with a coolant outlet opening 18 at one end portion thereof. A metal connector pipe 19 is installed to the coolant outlet opening 18.

As shown in Fig. 4, since the valve member fitting wall section 12 is located at the longitudinally central part of the generally elongate oval-shaped (in cross-section) cover section, a pair of elongate spaces or inlet and bypass passage sections 20, 21 are defined on the opposite sides of the valve member fitting wall section 12. The above-mentioned coolant outlet opening 18 is formed at the side of the bypass passage section 21 and located directly above the core coolant outlet 8. In other words, both the coolant outlet opening 18 and the core coolant outlet 8 are communicated with the bypass passage section 21. The inlet passage section 20 extending oppositely of the valve member fitting wall section 12 to the bypass passage section 21 covers the core coolant inlet 7 so as to be communicated with the core coolant inlet 7. The above-mentioned core coolant inlet 7 is opened generally at a position located symmetrical to the above-mentioned coolant outlet opening 18 with respect to the valve member fitting wall section 12.

Additionally, the valve member fitting wall section 12 is formed at its cylindrical wall portion with four ports 23, 24, 25, 26 which are formed at circumferential intervals of 90° (in angle). Specifically, the core inlet port 23 is opened to the inlet passage section 20; the bypass port 24 is opened to the bypass passage section 21; the low temperature coolant inlet port 25 is communicated with the low temperature coolant introduction opening 14; and the high temperature coolant inlet port 26 is communicated with the high temperature coolant introduction opening 15. Each of these ports is generally rectangular in section and opened in a circumferentially possibly wide angular range leaving a portion serving as a partition between the adjacent ports.

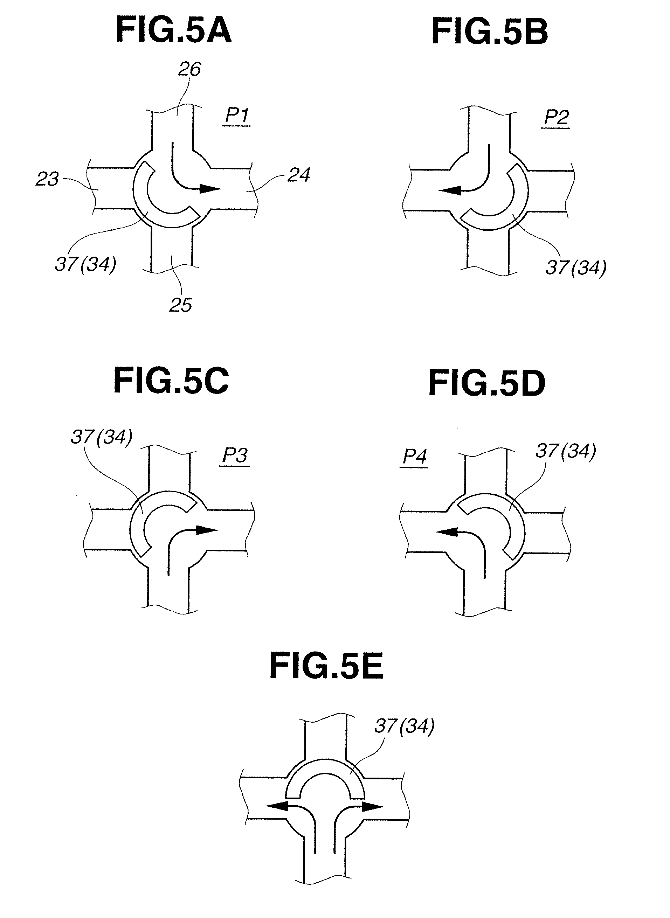

A generally cylindrical actuator section 32 forming part of a rotary valve 31 is installed to the valve housing 4A with a pair of bolts 33 through the bolt boss sections 13 of the valve housing 4A. A valve member 34 has a rotatable shaft 35 which is coaxially disposed in the actuator section 32 and arranged to be rotationally movably controlled by the actuator section 32 in such a manner that the rotational position of the valve member 34 is controlled. The rotatable shaft 25 of the valve member 34 is integrally connected to a circular base section 36 which includes a circular large diameter portion and a circular small diameter section coaxially integrally mounted on the large diameter portion. A semicylindrical wall 37 is formed integral with the large diameter portion of the base section 36 and extends along the periphery of the large diameter portion. The semicylindrical wall 37 extends downward or axially of the valve member 34 and circumferentially extends throughout an angular range of 180° also as shown in Figs. 5A to 5D. The base section 36 and the semicylindrical wall 37 are rotatably fitted relatively tightly to the inner peripheral surface of the valve member fitting wall section 12 of the valve housing 4A. Additionally, an annular seal member 39 is fitted in an annular space formed around the small diameter portion and on the large diameter portion of the base section 36. The semicylindrical wall 37 are rotationally positioned and basically arranged to allow the two ports of the four ports 23, 24, 25, 26 to be opened and simultaneously close the remaining two ports, so that each port is fully opened or fully closed. It is to be noted that the semicylindrical wall 37 may be rotationally positioned to allow each port to be partially opened or partially closed, as discussed after.

The rotary valve 31 including the actuator section 32, the valve member 34 and the like is located at the central part of the generally rectangular plate 2 of the heat exchanger core 3. The elongate cover section 11 of the valve housing 4A extends diagonally along a first diagonal line while the connector pipes 16, 17 extend diagonally along a second diagonal line crossing the first diagonal line, in which the rotary valve is located on the crossing of the first and second diagonal line.

As an example, the valve housing 4A is formed of an aluminum alloy die casting and brazed to the uppermost plate 2 of the heat exchanger core 3 simultaneously with brazing of the heat exchanger core 3 upon heating within the furnace, as discussed above. Additionally, the connector pipes 16, 17, 19 can be also brazed in positions simultaneously with brazing of the heat exchanger core 3. However, it will be appreciated that this invention is not limited to such a production manner or process, so that the valve housing and/or the connector pipes may be installed to the heat exchanger core 3 after the heat exchanger core has been brazed within the furnace to form an integral body, or may be fixed to the heat exchanger core 3 with bolts or the like.

The oil cooler 1 as configured above has the low temperature coolant introduction opening 14 and the high temperature coolant introduction opening 15 to which the low temperature coolant passage 61 and the high temperature coolant passage 60 shown in Fig. 2 are respectively connected as outside pipings. Additionally, the coolant return passage 62 shown in Fig. 2 is connected to the coolant outlet opening 18 of the oil cooler 1 as an outside piping.

Figs. 5A to 5D show an example of the changeover action of the flow passage control valve 4 arranged above. The flow passage control valve 4 has basically four changeover positions P1 (shown in Fig. 5A), P2 (shown in Fig. 5B), P3 (shown in Fig. 5C), P4 (shown in Fig. 5D) which are different from the preceding position by 90° in rotational angle of the valve member 34 (the semicylindrical wall 37).

For example, at the position P1, the semicylindrical wall 37 of the valve member 34 closes the core inlet port 23 and the low temperature coolant inlet port 25 while allowing the high temperature coolant inlet port 26 and the bypass port 24 to be communicated with each other. Accordingly, high temperature coolant fed from the high temperature coolant passage 60 is flown out from the coolant outlet opening 18 through the bypass passage section 21 to the coolant return passage 62, so that no coolant is introduced into the heat exchanger core 3.

At the position P2, the semicylindrical wall 37 of the valve member 34 closes the bypass port 24 and the low temperature coolant inlet port 25 while allowing the high temperature coolant inlet port 26 and the core inlet port 23 to be communicated with each other. Accordingly, relatively high temperature coolant heated by the cylinder block 51 and the cylinder head 52 is introduced into the heat exchanger core 3. This coolant flows through the inside of the heat exchanger core 3 and thereafter flows across the bypass passage section 21 of the cover section 11 of the valve housing 4A to be directed toward the coolant outlet opening 18 so as to flow out to the coolant return passage 62.

At the position P3, the semicylindrical wall 37 of the valve member 34 closes the core inlet port 23 and the high temperature coolant inlet port 25 while allowing the low temperature coolant inlet port 25 and the bypass port 24 to be communicated with each other. Accordingly, no coolant is introduced into the heat exchanger core 3 similarly to at the position P1; however, at this position P3, relatively low temperature coolant is flown through the bypass passage section 21 to the coolant return passage 62 at the downstream side.

At the position P4, the semicylindrical wall 37 of the valve member 34 closes the bypass port 24 and the high temperature coolant inlet port 26 while allowing the low temperature coolant inlet port 25 and the core inlet port 23 to be communicated with each other. Accordingly, relatively low temperature coolant which has passed through the radiator 53 is introduced into the heat exchanger core 3. This coolant flows through the inside of the heat exchanger core 3, and thereafter flows from the core coolant outlet 8 through the coolant outlet opening 18 to the bypass passage section 21 to flow out to the coolant return passage 62.

Thus, while the flow passage control valve 4 has basically four changeover positions, it is possible to position the semicylindrical wall 37 of the valve member 34 at an intermediate opening position P5 shown in Fig. 5E. Such an intermediate opening position can be obtained continuously or stepwise. At the position P5 as shown, the semicylindrical wall 37 of the valve member 34 closes the high temperature coolant inlet port 26 while allowing the core inlet port 23 and the bypass port 24 to be half opened and allowing the low temperature coolant inlet port 25 to be fully opened. Accordingly, relatively low temperature coolant is introduced into the heat exchanger core 3 at a relative low flow rate while a part of low temperature coolant is dividedly flown into the bypass port 24. By this, cooling action against hydraulic oil can be suppressed. It is to be noted that it is possible to control the semicylindrical wall 37 of the valve member 34 to be positioned at an intermediate opening position between two positions of the positions P1, P2, P3, P4, not only at the position P5 as shown Fig. 5E. For example, at the intermediate opening position between the position P2 and the position P4, it is possible that low temperature coolant and relatively high temperature coolant are mixed with each other to be introduced into the heat exchanger core 3.

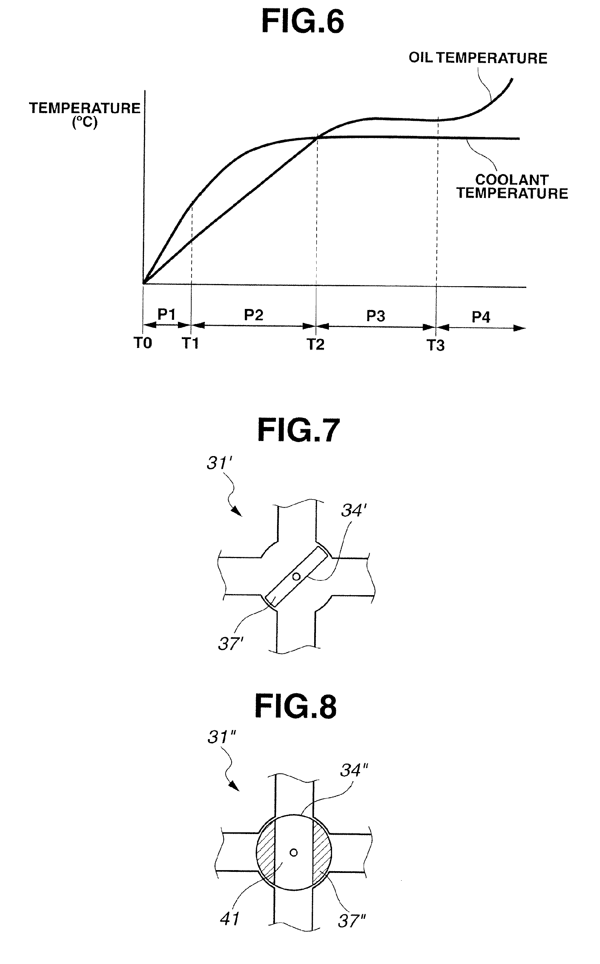

With the above-discussed arrangement, the temperature of hydraulic oil in the automatic transmission 63 can be more suitably controlled, for example, after a cold stating of the internal combustion engine. Fig. 6 shows the relationship between a temperature of coolant (for example, a temperature at an inlet of the water pump 55) and a temperature change of hydraulic oil, obtained under a temperature control as discussed after so that the relationship is not characteristics obtained upon simply leaving the oil cooler 1 as it is. Hereinafter, the temperature control for hydraulic oil by using the above oil cooler 1 will be discussed with reference to Fig. 6. It is to be noted that a temperature rise of hydraulic oil is basically slow as compared with that of coolant immediately after a cold starting of the engine.

During a period after a starting of the engine (at a time T0) and until a time T1 at which the coolant temperature reaches a certain level, the flow passage control valve 4 is controlled at the above-mentioned position P1 of Fig. 5A. By this, a heat transfer from coolant to hydraulic oil is avoided thereby promoting an early temperature rise of coolant. This contributes to suppression of friction loss on the side of the internal combustion engine and to securing a heater performance. During a period after the coolant temperature reaches the certain level and until a time T2 at which the coolant temperature and the hydraulic oil temperature become the same level, the flow passage control valve 4 is controlled at the above-mentioned position P2 of Fig. 5B. By this, relatively high temperature coolant is introduced into the heat exchanger core 3 so that hydraulic oil at a relatively low temperature is heated by the coolant. This contributes to, for example, an early friction lowering of the automatic transmission 63. At the time T2, the coolant temperature becomes nearly constant while the hydraulic oil temperature further rises. During a period from the time T2 to a time T3 at which the hydraulic oil temperature reaches a certain level, the flow passage control valve 4 is controlled at the intermediate opening position P5 of Fig. 5E so that a part of low temperature coolant is introduced into the heat exchanger core 3. This period between the time T2 and the time T3 corresponds to a period for providing a suitable cooling so as to prevent the hydraulic oil temperature from largely lowering. If the hydraulic oil temperature exceeds a certain level at the time T3 according to an operating condition of a vehicle on which the engine is mounted, and the like, the flow passage control valve 4 is controlled at the position P4 of Fig. 5D. By this, the whole amount of the low temperature coolant is introduced into the heat exchanger core 3 thereby accomplishing a further positive cooling.

In this connection, as shown in Fig. 4, the actuator section 32 of the flow control valve 4 is electronically connected to an electronic controller (no numeral) which controls the actuator section 32 of the flow passage control valve 4 to controllably rotate the valve member 34 in accordance with operating conditions of the internal combustion engine, for example, the temperatures of the coolant and the hydraulic oil. The flow control valve 4 can take, for example, the positions P1 to P5 when the valve member 34 is controllably rotated by the actuator section 32, thereby accomplishing, for example, the temperature control in a manner shown in Fig. 6.

While the control of the flow passage control valve 4 as shown in Fig. 6 is mere an example, it will be understood that the flow passage control valve 4 may be controlled in other manners, for example, by using suitable intermediate opening positions for the above-mentioned four ports 23, 24, 25, 26.

As discussed above, in the oil cooler 1 of this embodiment, a further wide-ranging and accurate temperature control for hydraulic oil can be accomplished not only by merely changing over a flowing-through and a bypassing but also by suitably controllably using relatively low temperature coolant and relatively high temperature coolant. Additionally, the rotary valve 31 is incorporated as a part of the fuel passage control valve 4 to the heat exchanger core 3 at a top center section, and two flow passages from the heat exchanger core 3 to the rotary valve 31 are formed by the valve housing 4A itself. Accordingly, whole the oil cooler 1 including the flow passage control valve 4 can be made small-sized.

Although the present invention has been discussed in detail with reference to one embodiment, it will be appreciated that known rotary valves of other types or spool valves other than rotary valves may be used in place of the above-mentioned rotary valve 31 of the flow passage control valve 4 without being limited to the rotary valve 31 including the valve member 34 having the semicylindrical wall 37. In this regards, as shown in Fig. 7, the rotary valve 31 may be replaced with a rotary valve 31' which includes a valve member 34' having a plate-shaped wall 37'. The plate-shaped wall 37' diametrically extends and rotatably disposed inside the valve member fitting wall section 12 so that certain ones of the above-mentioned four ports 23, 24, 25, 26 are communicable with each other. Additionally, as shown in Fig. 8, the rotary valve 31 may be replaced with a rotary valve 31" which includes a valve member 34" having a cylindrical section 37" rotatably fitted inside the valve member fitting wall section 12. The cylindrical section 37" is formed with a diametrically extending communication passage 41 through which certain ones of the above-mentioned four ports 23, 24, 25, 26 are communicable with each other. In case of using the rotary valves shown in Figs. 7 and 8, the circumferential placement of the four ports 23, 24, 25, 26 is not limited to that of the examples of Figs. 5A to 5D so as to take a mode according to the rotary valves 31', 31".

While the present invention has been shown and described as being configured as the oil cooler for hydraulic oil of the automatic transmission, it will be understood that the present invention may be applied to an oil cooler for lubricating oil of an internal combustion engine or oil coolers for a variety of equipments and instruments.

The entire contents of Japanese Patent Applications P2010-202652 (filed September 10, 2010) are incorporated herein by reference.

Although the invention has been described above by reference to certain embodiments and examples of the invention, the invention is not limited to the embodiments and examples described above. Modifications and variations of the embodiments and examples described above will occur to those skilled in the art, in light of the above teachings. The scope of the invention is defined with reference to the following claims.

## Claims

1. An oil cooler comprising:
a heat exchanger core including a plurality of plates laid one upon another to define each of an oil passage through which oil flows and an coolant passage through which coolant flows, between the plates, the plates including an uppermost plate which has a portion defining a core coolant inlet and a portion defining a core coolant outlet, the core coolant inlet and the core coolant outlet being communicated with the coolant passage; and
a flow passage control valve disposed on an uppermost part including the uppermost plate, of the heat exchanger core and including a portion defining a first coolant introduction opening through which coolant at a relatively high temperature is supplied and a portion defining a second coolant introduction opening through which coolant at a relatively low temperature is supplied, the relatively high temperature being higher than the relatively low temperature, the first coolant introduction opening and the second coolant introduction opening being changed over to be communicated with the core coolant inlet.

2. An oil cooler as claimed in Claim 1, wherein the flow passage control valve includes a portion defining a coolant outlet opening communicated with the core coolant outlet of the heat exchanger core, at least one of the first and second coolant introduction openings being communicable with the coolant outlet opening to allow the coolant from at least one of the coolant introduction opening to bypass the heat exchanger core so as to be flown to the coolant outlet opening.

3. An oil cooler as claimed in Claim 2, wherein the flow passage control valve includes a rotary valve including a section defining four ports which are respectively communicated with the first coolant introduction opening, the second coolant introduction opening, the core coolant inlet and the coolant outlet opening, and a rotatable valve member for changing over from a communication between at least two of the four ports to another communication between at least two of the four ports in accordance with a rotating position thereof.

4. An oil cooler as claimed in Claim 3, wherein the valve member has its intermediate position at which coolant supplied from one of the first and second coolant introduction openings is dividedly flown to the core coolant inlet and the coolant outlet opening.

5. An oil cooler as claimed in Claim 2, wherein the flow passage control valve includes a valve housing including a cover section installed on the uppermost part of the heat exchanger core and located to cover the core coolant outlet, the cover section forming thereinside a bypass passage extending from the first and second coolant introduction openings to the coolant outlet opening, the bypass passage being communicated with core coolant outlet of the heat exchanger core.

6. An oil cooler for a vehicle having an internal combustion engine, comprising:
a hear exchanger core including a plurality of plates laid one upon another to define each of an oil passage through which oil flows and an coolant passage through which coolant flows, between the plates, the oil flow passage and the coolant flow passage being adjacent to each other through the plate, the plates including an uppermost plate which has a portion defining a core coolant inlet and a portion defining a core coolant outlet, the core coolant inlet and the core coolant outlet being communicated with the coolant passage; and
a flow passage control valve disposed on an uppermost part including the uppermost plate, of the heat exchanger core and including a portion defining a first coolant introduction opening to which coolant at a relatively high temperature is supplied from a water jacket of the engine, a portion defining a second coolant introduction opening to which coolant at a relatively low temperature is supplied from a radiator of the engine, the relatively high temperature being higher than the relatively low temperature, and a valve member for accomplishing a changeover between a first communication of the core coolant inlet with the first coolant introduction opening and a second communication of the core coolant inlet with the second coolant introduction opening, in accordance with an operating condition of the engine.
